# EUROPÄISCHE PATENTSCHRIFT

(11) **EP 2 098 400 B1**
(45) Veröffentlichungstag und Bekanntmachung des Hinweises auf die Patenterteilung: **26.09.2012**
(21) Anmeldenummer: 09002546.1
(22) Anmeldetag: 24.02.2009
(51) Int. Cl.: B60K 11/04

(54) **Befestigungseinrichtung zur bewegbaren Befestigung eines Wärmetauschers**
Attachment device for mobile attachment of a heat exchanger
Dispositif de fixation destiné à la fixation mobile d'un échangeur thermique

(30) Priorität: 03.03.2008 DE 102008012204
(43) Veröffentlichungstag der Anmeldung: 09.09.2009
(73) Patentinhaber: Behr GmbH & Co. KG, 70469 Stuttgart (DE)
(72) Erfinder: Linde, Marc, 75228 Ispringen (DE); Götz, Peter, 70191 Stuttgart (DE)
(74) Vertreter: Grauel, Andreas

(56) Entgegenhaltungen:
- DE-A1-102004 003 197
- JP-A- 2006 256 461
- US-A1- 2007 251 669

## Beschreibung

Die vorliegende Erfindung betrifft die bewegliche Befestigung eines Wärmetauschers in einem Kraftfahrzeug.

Ein Wärmetauscher der betreffenden Art ist bevorzugt ein Zusatzwärmetauscher, wie bspw. ein Ölkühler. Solche Zusatzwärmetauscher werden bezüglich der Längsrichtung des Kraftfahrzeugs (vom Fahrzeugheck zur Fahrzeugfront) bevorzugt vor einem so genannten Kühlmodul angeordnet, das beispielsweise einen Wärmetauscher, insbesondere einen Kondensator, für eine Klimaanlage und/oder einen Wärmetauscher, insbesondere einen Kühler, für einen Motor umfasst. Eine solche Gesamtanordnung befindet sich typischerweise zwischen frontseitigen Lufteinlässen am Kraftfahrzeug und dem Motor. Der Zusatzwärmetauscher wird dabei bevorzugt versetzt unterhalb des Kühlmoduls angeordnet, um keinen Windschatten zu bieten und den dort vorhandenen Bauraum zu nutzen.

Aufgrund dieser Anordnung befindet sich ein solcher Zusatzwärmetauscher jedoch in einem besonderen Gefahrenbereich im Kraftfahrzeug, in dem er bei einem Frontal- und/oder Unterboden-Crash selbst mit niedrigen Aufprallgeschwindigkeiten beschädigt werden kann. Dies verursacht dann unverhältnismäßig hohe Reparaturkosten und kann, bspw. durch Kühlmittel- oder Ölaustritt, auch die Umwelt gefährden.

Daher schlägt die DE 10 2004 003 197 A1 eine freigabefähige Befestigungseinrichtung für den betreffenden Wärmetauscher vor. Der Wärmetauscher weist hierzu an seinem gegenüberliegenden schmalen Stirnseiten jeweils zwei Zapfen auf, welche in korrespondierenden, parallelen Führungen einer entsprechenden Halteeinrichtung am Fahrzeug gelagert sind. Ab einer definierten Krafteinwirkung knüpfen die Zapfen aus einer Verengung der Kulissen aus und der Wärmetauscher weicht entsprechend den Führungen nach oben und hinten aus, womit die Gefahr einer Beschädigung des Wärmetauschers verringert wird. Bei einer Weiterbildung dieser Befestigungseinrichtung bricht bei einer höheren definierten Krafteinwirkung zusätzlich die Verbindung der Halteeinrichtung zum Fahrzeug auf, sodass der Wärmetauscher zusammen mit der Halteeinrichtung weiter verschoben werden kann, ohne dass der Wärmetauscher selbst beschädigt wird.

Es ist Aufgabe der Erfindung, eine Befestigungseinrichtung für einen Wärmetauscher in einem Kraftfahrzeug derart weiterzubilden, dass zumindest im leichten Crashfall eine Beschädigung des Wärmetauschers sowie umliegender Komponenten verhindert bzw. zumindest minimiert wird.

Diese Aufgabe wird gelöst durch eine Befestigungseinrichtung mit den Merkmalen des Patentanspruches 1 bzw. mit einer Wärmetauscheranordnung nach Anspruch 9. Die abhängigen Patentansprüche betreffen vorteilhafte Weiterbildungen hiervon.

Die erfindungsgemäße Befestigungseinrichtung ermöglicht es dem Wärmetauscher, sich infolge einer Krafteinwirkung aus seiner Betriebslage herauszubewegen und entlang einer definierten Bewegungsbahn eine Kippbewegung auszuführen, womit eine Beschädigung verhindert wird. Bevorzugt ist der Wärmetauscher in seiner Betriebslage arretiert, weshalb die Krafteinwirkung zunächst einen vorbestimmten Wert übersteigen muss, um den Wärmetauscher freizugeben bzw. auszulösen, d.h. aus seiner Betriebslage herauszulösen. Zudem ist vorgesehen, dass der Wärmetauscher nach seiner Freigabe gelagert bleibt und bei seinen Ausweichbewegungen entlang einer definierten Bewegungsbahn geführt wird. Die Kippbewegung des Wärmetauschers erlaubt einen Einbau des Wärmetauschers auch in den für den Crashfall vorgesehenen Bauraum.

Die erfindungsgemäße Befestigungseinrichtung ermöglichst es dem Wärmetauscher vorteilhafterweise, sich im Falle einer Kollision aus dem Gefahrenbereich herauszubewegen. Hierbei sind jedoch die Ausweichbewegungen durch eine entsprechende Lagerung vorgegeben. Ein undefiniertes Herumschlagen des freigegebenen Wärmetauschers wird verhindert, womit sowohl die Anschlussverbindungen als auch umliegende Baukomponenten geschützt sind. Die erfindungsgemäße Befestigungseinrichtung erlaubt somit die Anordnung des Wärmetauschers in besonders gefährdeten und/oder kritischen Bereichen im Kraftfahrzeug, sogenannten Crash-Zonen, die bisher ungenutzt bleiben mussten, bspw. in unmittelbarer Nähe zum Unterboden oder zu anderen Wärmetauschern. Die erfindungsgemäße Befestigungseinrichtung ermöglicht zudem vorteilhafterweise ein leichtes Zurückführen des Wärmetauschers in die Betriebslage, nachdem dieser freigegeben wurde, was insbesondere dann von Vorteil ist, wenn der Wärmetauscher an einer schlecht zugänglichen Stelle im Kraftfahrzeug angeordnet ist. Der Ersatz eines Opferteils ist nicht erforderlich, aber möglich.

Gemäß der Erfindung sind in der Einbaulage in Bezug zur Fahrzeuglängsrichtung im Bereich der Längsseiten des Wärmetauschers jeweils ein vorderes erstes Führungselement und ein hinteres erstes Führungselement und an der Haltevorrichtung im Bereich der Längsseiten des Wärmetauschers jeweils ein vorderes zweites Führungselement, das mit einem vorderen ersten Führungselement in Eingriff steht, und ein hinteres zweites Führungselement in Eingriff steht, vorgesehen. Bei den Führungselementen handelt es sich dabei bevorzugt um Zapfen und korrespondierende Kulissenführungen.

In einer Ausgestaltung der Erfindung verlaufen die vorderen und die hinteren Kulissenführungen nicht parallel zueinander und sind jeweils bogenförmig gekrümmt ausgebildet, wobei die vorderen und die hinteren Kulissenführungen vorzugsweise aufeinander zu gekrümmt sind. Diese Konstruktion der Führungselemente ist für die gewünschte Kippbewegung des Wärmetauschers auch bei eingeschränkten Platzverhältnissen von besonderem Vorteil.

In einer weiteren Ausgestaltung der Erfindung sind die vorderen Kulissenführungen kürzer als die hinteren Kulissenführungen ausgebildet. Dies ermöglicht eine besonders vorteilhafte kinematische Führung des Wärmetauschers entlang seiner Bewegungsbahn.

In einer noch weiteren Ausgestaltung der Erfindung weisen die ersten oder die zweiten Führungselemente eine Arretierung für die zweiten bzw. die ersten Führungselemente in der Betriebslage des Wärmetauschers auf. Diese Arretierung kann zum Beispiel durch eine clipsartige Verengung der Kulissenführungen gebildet sein.

Bevorzugt weist die erfindungsgemäße Befestigungseinrichtung einen Modulrahmen zur Aufnahme des Wärmetauschers und einen oder mehrere, bevorzugt zwei Halter für diesen Modulrahmen auf. Ein solcher Modulrahmen vereinfacht die Montage des Wärmetauschers und gibt diesem auch einen besseren Halt. Auch ist der Wärmetauscher durch einen solchen Modulrahmen besser gegen Krafteinwirkungen geschützt. Der Modulrahmen, der bevorzugt im Wesentlichen rechteckförmig ausgebildet ist, weist zwei Längsseiten auf, die in der Einbaulage bevorzugt in Fahrzeuglängsrichtung oder Fahrzeugquerrichtung orientiert sind. Die einander gegenüberliegenden Längsseiten sind dabei an jeweils einem Halter derart befestigt, dass der Modulrahmen relativ zu diesen Haltern auf einer definierten Bewegungsbahn bewegbar gelagert ist.

Zum Beispiel handelt es sich bei dem Wärmetauscher um einen Zusatzwärmetauscher, der bezüglich der Fahrzeuglängsrichtung vor einem Kühlmodul und/oder in Nähe des Unterbodens des Kraftfahrzeuges angeordnet ist.
- Fig. 1: eine Gesamtanordnung von Wärmetauschern in perspektivischer Ansicht;
- Fig. 2: einen Zusatzwärmetauscher und dessen Befestigung nach einer Ausführung der vorliegenden Erfindung in perspektivischer Ansicht;
- Fig. 3: einen Befestigungsrahmen für den Zusatzwärmetauscher nach Fig. 2 und dessen Halter in einer perspektivischen Explosionsansicht; und
- Fig. 4a und 4b: die Funktionsweise der Befestigungseinrichtung in einer schematischen Seitenansicht.

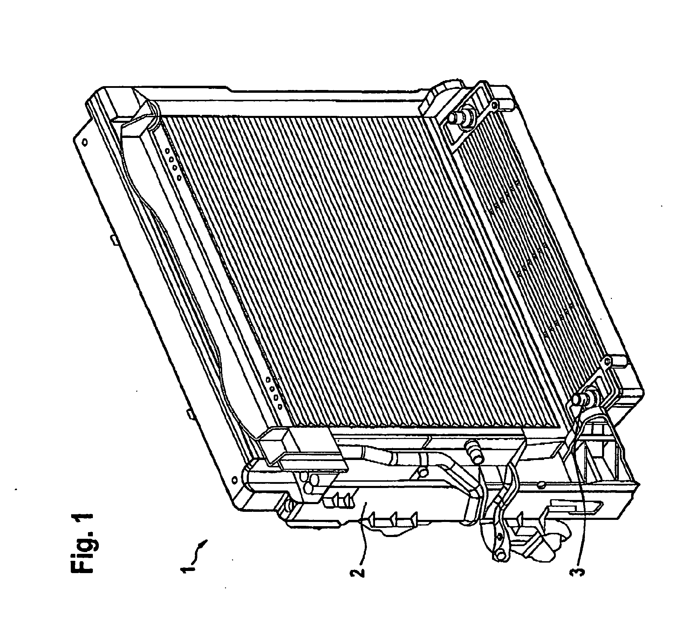

Figur 1 zeigt eine Gesamtanordnung 1 von Wärmetauschern, die frontseitig in einem (nicht dargestellten) Kraftfahrzeug eingebaut ist (Einbaulage). Die Gesamtanordnung 1 umfasst vorteilhaft ein Kühlmodul 2, das hier im Wesentlichen aus einem Kondensator für eine Klimaanlage und einem Kühlmittelkühler für einen Motor besteht. In Fahrzeuglängsrichtung (von links oben nach rechts unten in Fig. 1) ist dem Kühlmodul 2 eine Zusatzwärmetauschereinheit 3 vorgelagert, der versetzt unterhalb angeordnet ist und sich in Fahrzeugquerrichtung erstreckt. Die Befestigung bzw. Halterung eines Wärmetauschers, vorzugsweise eines solchen Zusatzwärmetauschereinheit 3 ist Gegenstand der vorliegenden Erfindung.

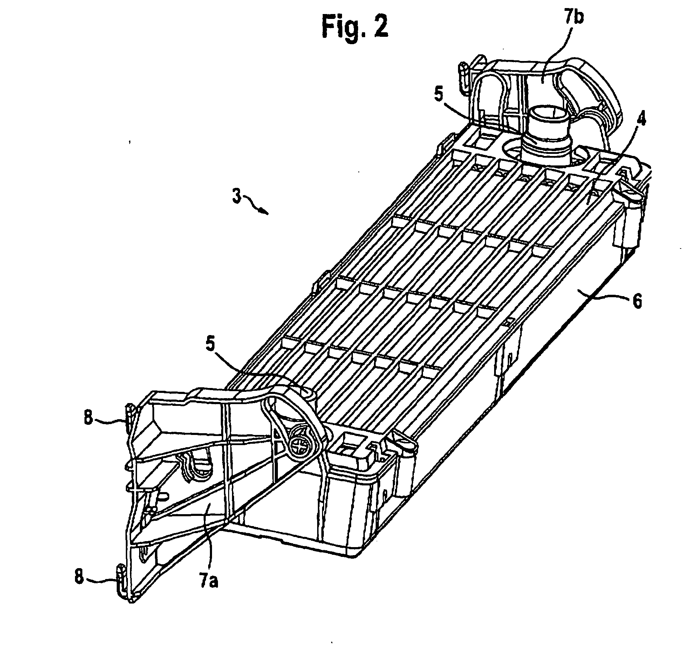

Figur 2 zeigt die vorgelagerte Zusatzwärmetauschereinheit 3. Diese umfasst einen Wärmetauscher; wie einen Zusatzwärmetauscher, 4 mit zwei Anschlussstutzen 5, der in einem Modulrahmen 6 aufgenommen ist. Weiterhin kann der Modulrahmen durch ein Gitter abgedeckt sein. Der Modulrahmen 6 ist an einem rechten Halter 7a und einem linken Halter 7b (bezogen auf die Fahrzeuglängsrichtung) mittels nachfolgend näher beschriebenen Zapfen und Kulissenführungen beweglich gelagert.

Gemäß eines weiteren Ausführungsbeispiels der Erfindung können die an dem Modulrahmen angeordneten Zapfen auch direkt an dem Wärmetauscher vorgesehen sein. Dies kann beispielsweise durch Spritzgießen oder Verclipsen an dem Wärmetauschen durchgeführt werden. Wenn die Zapfen an dem Halter vorgesehen sind, könnten die Kulissenführungen auch an dem Wärmetauscher vorgesehen sein.

Die Halter 7a und 7b weisen auf ihren Rückseiten Befestigungsmittel 8, wie beispielsweise Befestigungsclips bzw. -haken oder Schrauben o.ä. auf, die der Befestigung dienen, wie beispielsweise an einem Kühlmodul 2 oder an eine anderen Element. Die Halter 7a und 7b weisen zudem diverse Verstärkungsrippen auf. Sowohl der Modulrahmen 6 als auch die Halter 7a und 7b sind bevorzugt aus einem Kunststoffmaterial, vorzugsweise aus einem schlag- und bruchfesten Kunststoffmaterial, gebildet.

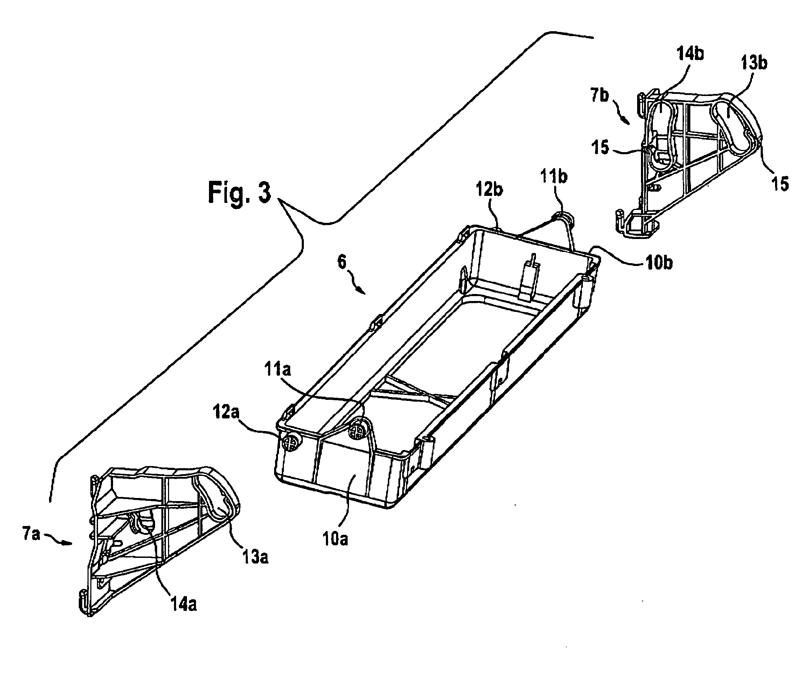

Figur 3 zeigt den Modulrahmen 6 mit abgenommenem Gitter und ohne eingesetzten Zusatzwärmetauscher 4. Dieser Modulrahmen 6 weist ebenfalls Verstärkungsrippen auf und ist im Wesentlichen rechteckförmig ausgebildet und weist zwei benachbarte beabstandete Querseiten sowie senkrecht hierzu eine (auf die Fahrzeuglängsrichtung bezogen) erste, vorzugsweise rechte Längsseite 10a und eine zweite, vorzugsweise linke Längsseite 10b auf. An der ersten, vorzugsweise rechten Längsseite 10a sind nach außen vorstehend ein vorderer Zapfen 11a und ein hinterer Zapfen 12a angeordnet, symmetrisch hierzu befinden sich auf der zweiten, vorzugsweise linken Längsseite 10b ebenfalls ein vorderer Zapfen 11b und ein hinterer Zapfen 12b.

Die Zapfen 11a, 12a bzw. 11b und 12b an der ersten, vorzugsweise rechten bzw. zweiten, vorzugsweise linken Längsseite 10a und 10b des Wärmetauschers oder des Modulrahmens 6 sind jeweils in einer korrespondierenden Kulissenführungen in den Haltern 7a und 7b aufgenommen, wodurch der Modulrahmen 6 relativ zu den Haltern 7a und 7b beweglich befestigt und gelagert ist.

Der rechte Halter 7a weist eine vordere Kulissenführung 13a und eine hintere Kulissenführung 14a auf. Selbiges gilt für den linken Halter 7b, der ebenfalls eine vordere Kulissenführung 13b und eine hintere Kulissenführung 14b aufweist. Wie insbesondere an dem linken Halter 7b sichtbar, weisen die Kulissenführungen 13a, 14a, 13b und 14b eine im Wesentlichen geschlossene Kontur auf und sind bogenförmig oder nierenförmig gekrümmt. Dabei weisen zumindest einige oder alle Kulissenführungen vorzugsweise eine gleiche Krümmungsrichtung auf. Die Kulissenführungen 13a, 14a, 13b und 14b sind umlaufend entlang ihrer Außenkontur mit einer Führungsfläche ausgestaltet, was eine einwandfreie Bewegung der Zapfen 11a, 12a, 11b und 12b ermöglicht. Dabei ist es vorteilhaft, wenn die Führungsfläche eine breite bzw. breitere Fläche aufweist als der Körper des Halters.

In einem Bereich, vorzugsweise im unteren Bereich, sind die Kulissenführungen 13a, 14a, 13b und 14b jeweils mit einer Arretierung für die Zapfen versehen. Die Arretierung ist beispielhaft durch eine zungenartige oder clipsartige Verengung 15 der Führung gebildet ist und wodurch eine Betriebslage des Zusatzwärmetauschers 4 vorgegeben ist, in welcher der Wärmetauscher während seines Betriebs sicher gehalten wird. Dabei ist es besonders vorteilhaft, wenn die zungenartige oder clipsartige Verengung durch einen Zunge gebildet wird, die zumindest teilweise in die Kulissenführung hineinragt, um den freien Durchgang durch die Kulisse zumindest zu erschweren. Dadurch dass die Zunge elastisch gebildet ist, kann die bei genügend großer angreifender Kraft ausweichen und den Weg für den Zapfen in der Kulissenführung freigeben.

Die vorderen Kulissenführungen 13a und 13b sind in ihren Führungslängen kürzer als die hinteren Kulissenführungen 14a und 14b ausgebildet, woraus sich eine besondere kinematische Führung des Wärmetauschers bei seiner Ausweichbewegung ergibt, was nachfolgend erläutert wird.

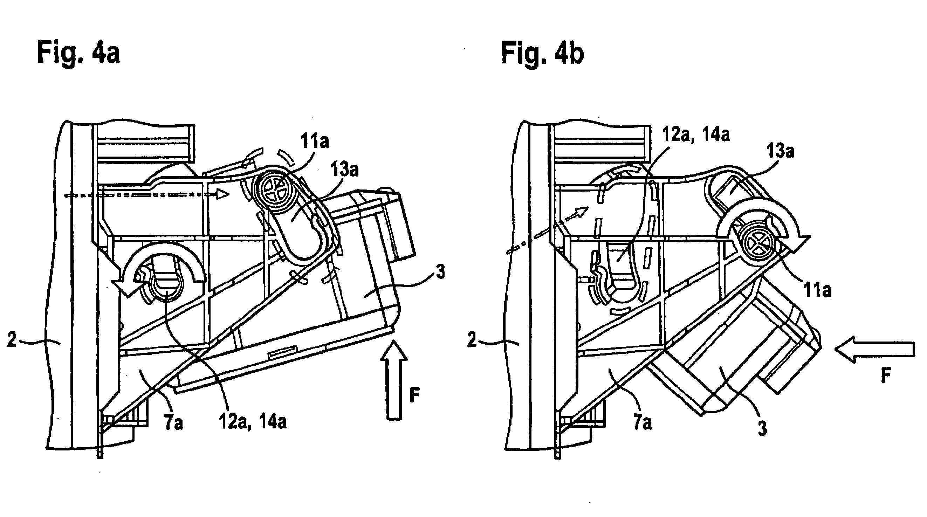

Außerdem sind die vorderen Kulissenführungen 13a, 13b und die hinteren Kulissenführungen 14a, 14b nicht parallel zueinander ausgebildet, sondern nähern sich in Richtung nach oben einander auf gekrümmten Bahnen an. Diese Ausgestaltung der Kulissenführungen erlaubt eine vorteilhafte Drehbewegung des Zusatzwärmetauschers 4 bei Krafteinwirkungen im Crashfall, wie nachfolgend anhand von Fig. 4a und 4b näher erläutert wird.

Weiterhin sind zungenartige Federelement 16 in der Kulissenführung vorgesehen, die dem Toleranzausgleich dienen, in dem es in der normalen Einbaulage auf die Zapfen des Modulrahmens oder des Wärmetauschers in Fahrzeugquerrichtung drückt. Dadurch kann aufgrund der Vorspannung zwischen den Federelementen wird somit eine Geräuschbildung vermieden, weil der Wärmetauscher dadurch quasi schwimmend gelagert wird und sich nicht frei bewegen kann, was zu einem Klappern führen könnte.

Die Figur 4a zeigt in einer schematischen Seitenansicht (Blickrichtung auf die rechte Seite) den Ablauf der Ausgleichsbewegung in einem ersten Belastungsfall. Die Krafteinwirkung auf den Wärmetauscher erfolgt in dem hier gezeigten Beispiel von unten auf den vorderen Bereich der Zusatzwärmetauschereinheit 3, bspw. in Folge eines Unterboden-Crashs. Die durch Pfeil F angedeutete Krafteinwirkung führt dazu, dass sich die vorderen Zapfen 11a und 11b aus ihrer Arretierung in den vorderen Kulissenführungen 13a bzw. 13b herauslösen und der Zusatzwärmetauscher 4 zusammen mit seinem Modulrahmen 6 eine Kipp-Ausgleichsbewegung entgegen dem Uhrzeigersinn (vgl. Pfeildarstellung) durchführt, die im Wesentlichen durch die vorderen Kulissenführungen 13a und 13b vorgegeben ist. Der Zusatzwärmetauscher 4 bewegt sich somit aus dem Gefahrenbereich heraus und eine Beschädigung kann verhindert werden. In diesem Fall verbleiben die hinteren Zapfen 12a und 12b in ihrer Arretierung und bilden einen Drehpunkt für die Ausgleichsbewegung. Dies bedeutet, dass die Krümmungen der vorderen Kulissenführungen 13a und 13b einem Kreisabschnitt um die Arretierungspunkte in den hinteren Kulissenführungen 14a und 14b für die hinteren Zapfen 12a und 12b entsprechen.

Die Figur 4b zeigt einen anderen Belastungsfall, bei dem die Krafteinwirkung auf die Zusatzwärmetauschereinheit 3 von vorne erfolgt, bspw. infolge eines Frontal-Crashs des Kraftfahrzeugs. Eine solche Krafteinwirkung führt dazu, dass die hinteren Zapfen 12a und 12b aus ihren Arretierungen in den hinteren Kulissenführungen 14a und 14b herausgelöst werden und der Zusatzwärmetauscher 4 zusammen mit dem Modulrahmen 6 eine Kipp-Ausgleichsbewegung im Uhrzeigersinn (vgl. Pfeildarstellung) ausführt. Hierbei werden die hinteren Zapfen 12a und 12b in den korrespondierenden hinteren Kulissenführungen 14a und 14b translatorisch geführt, während die vorderen Zapfen 11a und 11b in ihrer Arretierung verharren und als Drehpunkte für die Kipp-Ausgleichsbewegung dienen. Dies bedeutet wiederum, dass die Krümmungen der hinteren Kulissenführungen 14a und 14b einem Kreisabschnitt um die Arretierungspunkte in den vorderen Kulissenführungen 13a und 13b für die vorderen Zapfen 11a und 11b entsprechen. Da die hinteren Kulissenführungen 14a und 14b länger als die vorderen Kulissenführungen 13a und 13b ausgebildet sind, kann im Uhrzeigersinn (infolge der hier beschriebenen Krafteinwirkung) eine größere Kippung des Zusatzwärmetauschers 3 erfolgen als entgegen dem Uhrzeigersinn.

Die maximale Kippung des Zusatzwärmetauschers 4 ist durch die Länge der vorderen und hinteren Kulissenführungen 13a und 13b sowie 14a und 14b vorgegeben und richtet sich danach, welcher Kippwinkel gefahrenfrei für den Zusatzwärmetauscher und dessen Anschlüsse sowie für die umliegenden Komponenten möglich ist.

Durch die erfindungsgemäß ausgestalteten Kulissenführungen 13a, 13b, 14a, 14b für die Zapfen 11a, 11b, 12a, 12b des Modulrahmens 6 des Zusatzwärmetauschers 4 ist selbst bei dem eingeschränkten Bauraum in einem Kraftfahrzeug eine sichere Halterung des Zusatzwärmetauschers 4 gewährleistet, die zumindest im leichten Crashfall ein Ausweichen des Zusatzwärmetauschers 4 ohne eine Beschädigung desselben oder umliegender Komponenten ermöglicht.

Während in dem obigen Ausführungsbeispiel der Zusatzwärmetauscher 4 zur Montage in einem Modulrahmen 6 aufgenommen ist, ist es ebenso möglich, den versteifenden Modulrahmen 6 integral mit dem Wärmetauscher 4 auszubilden oder die Zapfen 11a, 11b, 12a, 12b der Befestigungseinrichtung direkt am Zusatzwärmetauscher 4 vorzusehen.

Im obigen Ausführungsbeispiel ist der Zusatzwärmetauscher 4 bzw. sein Modulrahmen 6 an Haltern 7a, 7b gelagert, die an dem Kühlmodul 2 befestigt sind. Die Halter 7a, 7b können in analoger Weise auch an anderen Komponenten oder am Fahrzeug selbst (Fahrzeugrahmen, Querträger, Stützstreben, etc.) angebracht werden.

Ferner sind in dem obigen Ausführungsbeispiel die Kulissenführungen an den Haltern und die Zapfen am Modulrahmen bzw. am Wärmetauscher vorgesehen. Alternativ können die Kulissenführungen auch am Modulrahmen bzw. am Wärmetauscher und die Zapfen an den Haltern ausgebildet werden. Weiter ist es auch möglich, an den Haltern jeweils eine Kulissenführung und einem Zapfen und am Modulrahmen bzw. Wärmetauscher korrespondierend einen Zapfen und eine Kulissenführung an jeder Seite vorzusehen.

## Patentansprüche

1. Befestigungseinrichtung für einen Wärmetauscher (4) insbesondere in einem Kraftfahrzeug, mit wenigstens einem ersten Führungselement (11a, 11 b, 12a, 12b), das mit dem Wärmetauscher (4) verbindbar ist, und wenigstens einem zweiten Führungselement (13a, 13b, 14a, 14b) das an einer Haltevorrichtung (7a, 7b) für den Wärmetauscher (4) vorsehbar ist, wobei
das erste und/oder das zweite Führungselement (11a, 11 b, 12a, 12b, 13a, 13b, 14a, 14b) derart ausgebildet und/oder angeordnet ist/sind, dass der Wärmetauscher (4) bei einer auf ihn wirkenden Krafteinwirkung aus seiner Betriebslage freigegeben werden kann und eine Kippbewegung entlang einer definierten Bewegungsbahn ausführen kann und wobei
in der Einbaulage in Bezug zur Fahrzeuglängsrichtung im Bereich der Längsseiten des Wärmetauschers (4) jeweils ein vorderes erstes Führungselement (11a, 11b) und ein hinteres erstes Führungselement (12a, 12b) und an der Haltevorrichtung (7a, 7b) im Bereich der Längsseiten des Wärmetauschers jeweils ein vorderes zweites Führungselement (13a, 13b), das mit einem vorderen ersten Führungselement (11a, 11b) in Eingriff steht, und ein hinteres zweites Führungselement (14a,14b), das mit einem hinteren ersten Führungselement (12a, 12b) in Eingriff steht, vorgesehen sind, wobei
die ersten Führungselemente (11a, 11b, 12a, 12b) Zapfen oder Kulissenführungen enthalten und die zweiten Führungselemente (13a, 13b, 14a, 14b) korrespondierende Kulissenführungen oder Zapfen enthalten-

2. Befestigungseinrichtung nach Anspruch 1,
**dadurch gekennzeichnet, dass**
die vorderen und die hinteren Kulissenführungen nicht parallel zueinander verlaufen.

3. Befestigungseinrichtung nach Anspruch 1 oder 2,
**dadurch gekennzeichnet, dass**
die vorderen und/oder hinteren Kulissenführungen bogenförmig gekrümmt ausgebildet sind.

4. Befestigungseinrichtung nach Anspruch 3,
**dadurch gekennzeichnet, dass**
die vorderen und die hinteren Kulissenführungen aufeinander zu gekrümmt sind.

5. Befestigungseinrichtung nach einem der Ansprüche 1 bis 4,
**dadurch gekennzeichnet, dass**
die vorderen Kulissenführungen kürzer als die hinteren Kulissenführungen ausgebildet sind.

6. Befestigungseinrichtung nach einem der vorherigen Ansprüche,
**dadurch gekennzeichnet, dass**
die ersten und/oder die zweiten Führungselemente eine Arretierung (15) für die zweiten bzw. die ersten Führungselemente in der Betriebslage des Wärmetauschers (4) aufweisen.

7. Befestigungs-einrichtung nach Anspruch 6, **dadurch gekennzeichnet, dass** die Arretierung mittels zungenartiger Vorsprünge erfolgt.

8. Befestigungs-einrichtung nach Anspruch 6 oder 7, **dadurch gekennzeichnet, dass** die zungenartigen Vorsprünge elastisch ausgebildet sind.

9. Anordnung eines Wärmetauschers insbesondere in einem Kraftfahrzeug, wobei der Wärmetauscher mit einer Befestigungs-einrichtung nach einem der vorhergehenden Ansprüchen 1 bis 8 angeordnet ist.

## Claims

1. An attachment device for a heat exchanger (4) in particular in a motor vehicle, comprising at least one first guide element (11a, 11b, 12a, 12b), which can be connected to the heat exchanger (4), and at least one second guide element (13a, 13b, 14a, 14b), which can be provided on a retaining device (7a, 7b) for the heat exchanger (4),
wherein the first and/or the second guide elements (11a, 11b, 12a, 12b, 13a, 13b, 14a, 14b) are designed and/or arranged such that the heat exchanger (4) can be released from the operating position thereof when a force acts thereon and can carry out a tilting movement along a defined movement path, and
wherein, in the installation position in relation to the vehicle longitudinal direction, a front first guide element (11a, 11b) and a rear first guide element (12a, 12b) are provided in the region of the longitudinal sides of the heat exchanger (4), respectively, and a front second guide element (13a, 13b), which is engaged with a front first guide element (11a, 11b), and a rear second guide element (14a, 14b), which is engaged with a rear first guide element (12a, 12b), are provided on the retaining device (7a, 7b) in the region of the longitudinal sides of the heat exchanger, respectively, wherein the first guide elements (11a, 11b, 12a, 12b) contain journals or slotted guide systems and the second guide elements (13a, 13b, 14a, 14b) contain corresponding slotted guide systems or journals.

2. The attachment device according to claim 1, **characterized in that** the front and rear slotted guide systems do not run parallel to each other.

3. The attachment device according to claim 1 or 2, **characterized in that** the front and/or rear slotted guide systems are curved in an arcuate manner.

4. The attachment device according to claim 3, **characterized in that** the front and rear slotted guide systems are curved toward one another.

5. An attachment device according to any one of claims 1 to 4, **characterized in that** the front slotted guide systems are shorter than the rear slotted guide systems.

6. An attachment device according to any one of the preceding claims, **characterized in that**, in the operating position of the heat exchanger (4), the first and/or second guide elements comprise a locking device (15) for the second or first guide elements.

7. The attachment device according to claim 6, **characterized in that** the locking is carried out by means of tongue-like protrusions.

8. The attachment device according to claim 6 or 7, **characterized in that** the tongue-like protrusions are elastic.

9. Arrangement of a heat exchanger in particular in a motor vehicle, wherein the heat exchanger is arranged with an attachment device according to any one of the preceding claims 1 to 8.

## Revendications

1. Dispositif de fixation pour un échangeur de chaleur (4), en particulier dans un véhicule automobile, comprenant au moins un premier élément de guidage (11a, 11b, 12a, 12b) qui peut être combiné avec l'échangeur de chaleur (4), et au moins un deuxième élément de guidage (13a, 13b, 14a, 14b) qui peut être prévu sur un dispositif de retenue (7a, 7b) pour l'échangeur de chaleur (4), où le premier et / ou le deuxième élément de guidage (11a, 11b, 12a, 12b, 13a, 13b, 14a, 14b) est /sont configuré(s) et / ou disposé(s) de manière telle, que l'échangeur de chaleur (4), sous l'effet d'une force s'exerçant sur lui, puisse être dégagé de sa position de fonctionnement et puisse exécuter un mouvement basculant le long d'une trajectoire de mouvement définie et où, en position installée, un premier élément de guidage avant (11a, 11b) et un premier élément de guidage arrière (12a, 12b) sont prévus respectivement dans la zone des grands côtés de l'échangeur de chaleur (4), par rapport à la direction longitudinale du véhicule et, sur le dispositif de retenue (7a, 7b), il est prévu, dans la zone des grands côtés de l'échangeur de chaleur (4), respectivement un deuxième élément de guidage avant (13a, 13b) qui est en prise avec un premier élément de guidage avant (11a, 11b), et un deuxième élément de guidage arrière (14a, 14b) qui est en prise avec un premier élément de guidage arrière (12a, 12b), où les premiers éléments de guidage (11a, 11b, 12a, 12b) comportent des tourillons ou guides de coulisses, les deuxièmes éléments de guidage (13a, 13b, 14a, 14b) comportant des guides de coulisses ou tourillons correspondants.

2. Dispositif de fixation selon la revendication 1, **caractérisé en ce que** les guides de coulisses avant et arrière s'étendant de façon non parallèle entre eux.

3. Dispositif de fixation selon la revendication 1 ou 2, **caractérisé en ce que** les guides de coulisses avant et / ou arrière sont configurés en étant recourbés de façon arquée.

4. Dispositif de fixation selon la revendication 3, **caractérisé en ce que** les guides de coulisses avant et arrière sont recourbés en se rapprochant les uns des autres.

5. Dispositif de fixation selon l'une quelconque des revendications 1 à 4, **caractérisé en ce que** les guides de coulisses avant sont configurés en étant plus courts que les guides de coulisses arrière.

6. Dispositif de fixation selon l'une quelconque des revendications précédentes, **caractérisé en ce que** les premiers et / ou les deuxièmes éléments de guidage présentent, en position de fonctionnement de l'échangeur de chaleur (4), un dispositif d'arrêt (15) pour les deuxièmes ou les premiers éléments de guidage.

7. Dispositif de fixation selon la revendication 6, **caractérisé en ce que** le dispositif d'arrêt fonctionne à l'aide de parties saillantes en forme de languettes.

8. Dispositif de fixation selon la revendication 6 ou 7, **caractérisé en ce que** les parties saillantes en forme de languettes sont configurée de façon élastique.

9. Agencement d'un échangeur de chaleur, en particulier dans un véhicule automobile, où l'échangeur de chaleur est disposé en étant doté d'un dispositif de fixation selon l'une quelconque des revendications précédentes 1 à 8.
